# EUROPEAN PATENT SPECIFICATION

(11) **EP 2 020 270 B1**
(45) Date of publication and mention of the grant of the patent: **09.02.2011**
(21) Application number: 06796630.9
(22) Date of filing: 22.08.2006
(51) Int. Cl.: B23C 5/10

(54) **ROTARY CUTTING TOOL**
DREHSCHNEIDWERKZEUG
OUTIL DE COUPE ROTATIF

(30) Priority: 28.04.2006 JP 2006127036
(43) Date of publication of application: 04.02.2009
(73) Proprietor: UNION TOOL CO., Tokyo 140-0013 (JP)
(72) Inventor: SATO, Akira, Tokyo 140-0013 (JP); TAKAHASHI, Shoichi, Tokyo 140-0013 (JP); KOSHIO, Jun-Ichi, Tokyo 140-0013 (JP)
(74) Representative: Kramer - Barske - Schmidtchen
(86) International application number: PCT/JP2006/316416
(87) International publication number: WO 2007/125613

(56) References cited:
- WO-A-92/12817
- JP-A- 05 031 615
- JP-A- 54 099 287
- JP-U- 60 053 419
- JP-U- 60 053 419
- JP-U- 60 053 420
- JP-U- 60 053 420
- JP-U- 60 109 712

## Description

### [Technical Field]

The present invention relates to a rotary cutting tool.

### [Background Art]

Various proposals for rotary cutting tools have been made, for example, to improve the chip removal capacity of end mills, wherein chip-removing grooves are provided in the external periphery of the distal end of a cylindrically shaped tool main body, and end cutting edges are provided to the points of intersection between the cutting faces of the chip-removing grooves and the distal-end flanks of the tool main body.

Japanese Unexamined Utility Model Application No. 63-131313 (Patent Reference 1), for example, discloses a rotary cutting tool according to the preamble of claim 1, and it shows a technique relating to so uneven end cutting edge shapes, wherein the cutting tool is provided with end cutting edges that are formed facing the center of the tool from the external peripheral edge at the distal end of the tool, a pair of the end cutting edges on the side facing the tool center is cut away, and the cutting edges at these parts are made shorter than the other end cutting edges.
[**Patent Reference 1]** Japanese Unexamined Utility Model Application No. 63-131313

Other rotary cutting tools are known from JP 60-109712 U, JP 60-53419 U or JP 60-53420 U.

### [Disclosure of the Invention]

### [Problems the Invention Is Intended to Solve]

It is known, however, that in cases in which an end mill having such an uneven end cutting edge shape, or another end mill with a conventional structure, is used in longitudinal feeding, chips are continually produced and accumulated in the grooves between the end cutting edges, the end cutting edges are likely to be cut or scratched, and longitudinal machining cannot be performed efficiently, and sufficient chip removal capacity have still not been obtained.

The present invention was designed in view of the above-described situation, and an object thereof is to provide a highly practical rotary cutting tool with which chips can be satisfactorily removed even during longitudinal feeding, and the accumulation of chips can be minimized.

### [Means for Solving These Problems]

A summary of the present invention will be described with reference to the accompanying diagrams.

The present invention relates to a rotary cutting tool according to claim 1.

According to a second aspect of the invention, in the rotary cutting tool according to the first aspect of the invention, the non-cutting parts 22 are provided via stepped parts 9 to the tool's external periphery of cutting parts 21, which have cutting edges that extend to a specified position in the external peripheral direction of the tool from either the tool center O or from a position near the center.

According to a third aspect of the invention, in the rotary cutting tool according to the second aspect of the invention, end cutting edges 7 other than the end cutting edges 6 on which the non-cutting parts 22 are formed are designed as end cutting edges 7 that have cutting edge portions whose length is equal to or less than the lengths of the end cutting edges 6 provided with non-cutting parts 22, as measured from the external peripheral edges at the distal end of the tool main body 1.

According to a fourth aspect of the invention, in the rotary cutting tool according to the third aspect of the invention, the non-cutting parts 22 are provided within the range of the rotational paths of the other end cutting edges 7.

According to a fifth aspect of the invention, in the rotary cutting tool according to the fourth aspect of the invention, the amount by which the non-cutting parts 22 are recessed in the axial direction extends below the positions of the cutting edge portions of the other end cutting edges 7.

According to a sixth aspect of the invention, in the rotary cutting tool according to the fifth aspect of the invention, the non-cutting parts 22 are provided across a length equal to or greater than at least 5% of the cutting edge lengths of the other end cutting edges 7.

According to a seventh aspect of the invention, in the rotary cutting tool according to the sixth aspect of the invention, the non-cutting parts 22 are formed to reach the external peripheral edges of the tool main body 1.

According to an eighth aspect of the invention, in the rotary cutting tool according to the sixth aspect of the invention, the non-cutting parts 22 are configured so as to be recessed in the axial direction of the tool main body 1, leaving part of the external periphery of the tool exposed.

According to a ninth aspect of the invention, in the rotary cutting tool according to the eighth aspect of the invention, the angle β at which the bottom surfaces 23 of the non-cutting parts 22 are inclined in relation to a horizontal reference line L as seen from the side of the tool is greater than the concave angles α of the flanks 8 that form the cutting parts 21.

According to a tenth aspect of the invention, in the rotary cutting tool according to any of the first through the ninth aspect of the invention, the numerous end cutting edges are disposed equally separated in the circumferential direction of the tool.

According to an eleventh aspect of the invention, in the rotary cutting tool according to the tenth aspect of the invention, at least one of the numerous helical chip-removing grooves 2 is disposed in the circumferential direction of the tool at a different division angle than the other chip-removing grooves 2.

According to a twelfth aspect of the invention, in the rotary cutting tool according to any of the first through the ninth aspect of the invention, external peripheral edges 11 are formed at lines of intersection between the cutting faces 3 of the chip-removing grooves 2 of the tool main body 1, and either the external peripheral surfaces of the tool main body 1 or the external peripheral flanks formed at the external periphery of the tool main body 1.

According to a thirteenth aspect of the invention, in the rotary cutting tool according to the tenth aspect of the invention, external peripheral edges 11 are formed at lines of intersection between the cutting faces 3 of the chip-removing grooves 2 of the tool main body 1, and either the external peripheral surfaces of the tool main body 1 or the external peripheral flanks formed at the external periphery of the tool main body 1.

According to a fourteenth aspect of the invention, in the rotary cutting tool according to the eleventh aspect of the invention, external peripheral edges 11 are formed at lines of intersection between the cutting faces 3 of the chip-removing grooves 2 of the tool main body 1, and either the external peripheral surfaces of the tool main body 1 or the external peripheral flanks formed at the external periphery of the tool main body 1.

According to a fifteenth aspect of the invention, in the rotary cutting tool according to the twelfth aspect of the invention, the end cutting edges and the external peripheral edges 11 are connected via a corner awl edge with an arcuate shape that curves towards the outside of the tool.

According to a sixteenth aspect of the invention, in the rotary cutting tool according to the thirteenth aspect of the invention, the end cutting edges and the external peripheral edges 11 are connected via a corner awl edge with an arcuate shape that curves towards the outside of the tool.

According to a seventeenth aspect of the invention, in the rotary cutting tool according to the fourteenth aspect of the invention, the end cutting edges and the external peripheral edges 11 are connected via a corner awl edge with an arcuate shape that curves towards the outside of the tool.

According to a eighteenth aspect of the invention, in the rotary cutting tool according to any of the first through the ninth aspect of the invention, the sides of the end cutting edges that face the tool center protrude farther in the axial direction of the tool main body 1 than does the tool's external peripheral sides.

According to a nineteenth aspect of the invention, in the rotary cutting tool according to the tenth aspect of the invention, the sides of the end cutting edges that face the tool center protrude farther in the axial direction of the tool main body 1 than does the tool's external peripheral sides.

According to a twentieth aspect of the invention, in the rotary cutting tool according to the eleventh aspect of the invention, the sides of the end cutting edges that face the tool center protrude farther in the axial direction of the tool main body 1 than does the tool's external peripheral sides.

### [Effects of the Invention]

The present invention is a highly practical rotary cutting tool with which chips can be satisfactorily removed even during longitudinal feeding, and the accumulation of chips can be minimized, owing to the configuration described above.

### [Best Mode for Carrying Out the Invention]

Preferred embodiments of the present invention will now be described while in simplified form while depicting the operation of the present invention with reference to the diagrams.

Providing at least one end cutting edge 6 that has a non-cutting part 22 reduces the amount of chips produced by the end cutting edge 6 and prevents the chips from accumulating.

Also, fewer chips are produced around the external periphery of the tool and the removal of chips produced in the center of the tool is less likely to be impeded, because the non-cutting part 22 is formed near the external periphery of the tool. Since the part where the non-cutting part 22 is formed is within the rotational path of the rest of the end cutting edge 7, the end cutting edge 6 that has the non-cutting part 22 does not cut any material in the portion provided with a non-cutting part 22, but cutting is performed by the rest of the end cutting edge 7.

Therefore, the present invention provides a highly practical rotary cutting tool whereby chips can be satisfactorily removed even during longitudinal feeding, and the accumulation of chips can be minimized.

### [Embodiment 1]

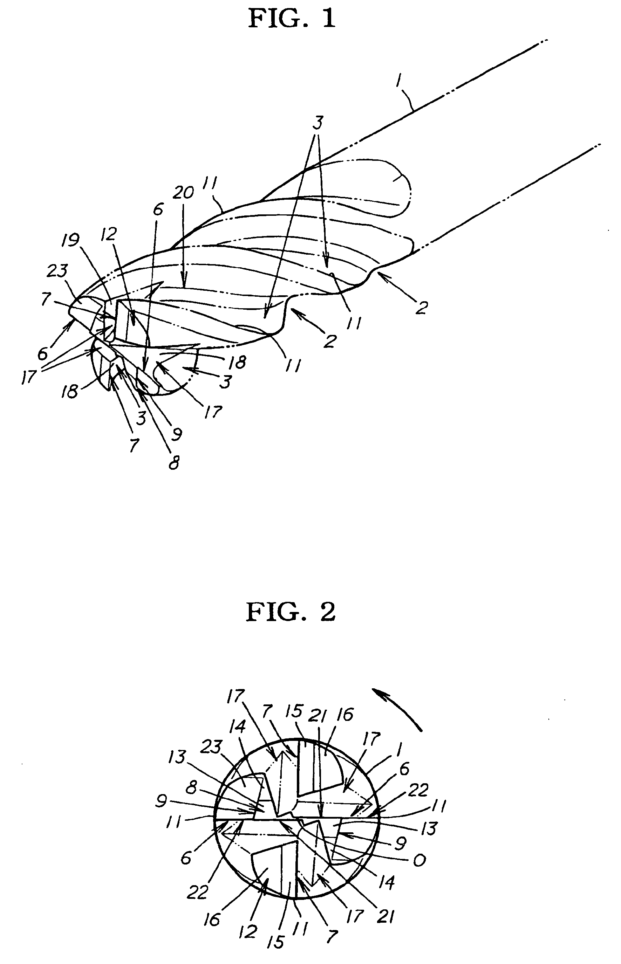

Embodiment 1 of the present invention will now be described with reference to FIGS. 1 through 11.

Embodiment 1 is a rotary cutting tool in which a large number of helical chip-removing grooves 2 are provided in the external periphery of the distal end of a substantially cylindrical tool main body 1, and in which end cutting edges are provided at the points of intersection between the cutting faces 3 of the chip-removing grooves 2 and the distal-end flanks of the tool main body 1. At least one of the end cutting edges is configured so that a non-cutting part 22 is formed by the part of the cutting edge near the external periphery of the tool being recessed into the tool main body 1 in the axial direction, and the non-cutting part 22 is formed extending to the external peripheral edge of the tool main body 1.

Specifically, Embodiment 1 is an end mill in which external peripheral edges 11 are formed at the points of intersection between the cutting faces 3 (the walls that face in the rotational direction of the tool) of the chip-removing grooves 2 of the tool main body 1 and the external peripheral surface of the tool main body 1, as shown in FIGS. 1 through 3; the proximal end has a shank that links with the tool attachment part of a milling cutter disc; and the end mill is attached to the milling cutter disc and is used to perform hole drilling (longitudinal feeding), end surface machining (transverse feeding), or another cutting process on an aluminum plate or another such metal.

Specifically, Embodiment 1 is a so-called four-edged square end mill having four end cutting edges, wherein a pair of opposing end cutting edges are set as end cutting edges 6 each having a non-cutting part 22, and the other pair of opposing end cutting edges 7 are set as end cutting edges 7 provided with cutting edges whose lengths are equal to or less than those of the end cutting edges 6 provided with non-cutting parts 22, as measured from the external peripheral edge of the distal end of the tool main body 1.

Chip pockets 17 (gashes) are provided between each of the end cutting edges 6, 7. These gashes comprise gash surfaces 18 formed on the distal sides of the cutting faces 3 of the chip-removing grooves 2, gash surfaces 19 formed on groove walls 20 that face the cutting faces 3 of the chip-removing grooves 2, and gash bottom surfaces 25 connected to the gash surfaces 18, 19. These three types of surfaces form a substantial U shape in plan view. Another possibility is to not provide the gash bottom surfaces 25, in which case the gash surfaces 18, 19 form a substantial V shape in plan view.

Also, in Embodiment 1, four end cutting edges are provided at 90° intervals, and the four chip-removing grooves 2 are designed so that the chip-removing grooves 2 at the front of the end cutting edges 6 provided with non-cutting parts 22, and the chip-removing grooves 2 at the front of the other end cutting edges 7 are set at 88° or 92° intervals.

Each component will now be described in detail.

The end cutting edges 6 provided with non-cutting parts 22 are configured by providing non-cutting parts 22 via stepped parts 9 to the external peripheral side of cutting parts 21 provided with cutting edges that extend from the vicinity of the tool center O to specific locations in the external peripheral direction of the tool.

The cutting edge portions of the end cutting edges 6 provided with non-cutting parts 22 are formed at the points of intersection between the cutting faces 3 of the chip-removing grooves 2 and the flanks 8 that form the cutting edge portions of the end cutting edges 6. The flanks 8 that form the cutting edge portions of the end cutting edges 6 are configured from first flanks 13 and second flanks 14. In Embodiment 1, the flanks 8 are configured from first flanks 13 and second flanks 14, but another possibility is to form three or more flanks, or to form only one flank (similar to the flanks 12 that form the cutting edge portions of the other end cutting edges 7, described later) .

Therefore, the cutting edge portions of the end cutting edges 6 provided with non-cutting parts 22 are formed at the points of intersection between the first flanks 13 and the gash surfaces 18 formed on the distal sides of the cutting faces 3.

The end cutting edges 6 provided with non-cutting parts 22 have so-called center-raised shapes that are formed in the direction of tool rotation in the vicinity of the tool center O, and that are longer than the tool radius r from the external peripheral edges (external peripheral edges 11) of the distal end of the tool main body 1. Specifically, the end cutting edges 6 are provided so as to be symmetrical with respect to the tool center O, and so that at least the ends on the side facing the tool center overlap in the radial direction.

It is also acceptable to arrange the end cutting edges 6 opposite of the manner described above. Specifically, the configuration may be designed so that the end cutting edges 6 provided with non-cutting parts 22 are not formed extending from the external peripheral edges at the distal end of the tool main body to the tool center O, but are instead provided at halfway positions that do not reach the tool center O. Furthermore, so-called center-lowered shapes may be adopted, in which the end cutting edges 6 extend from the external peripheral edges 11 of the tool main body 1 to the vicinity of the tool center O, and extend past the tool center O in the direction opposite that of tool rotation. The other end cutting edges 7 may similarly also have either center-raised shapes or center-lowered shapes.

The other end cutting edges 7 are configured to extend a specified distance (a length equal to or less than the tool radius r) from the external peripheral edges 11 of the tool main body 1 to the tool center O, such that the chip pockets 17 (gashes) can be formed between the end cutting edges 7 and the tool center O. Therefore, the rotational paths (as seen from the distal ends) of the end cutting edges 6 provided with non-cutting parts 22, and the other end cutting edges 7 partially overlap in the external peripheral side of the tool.

The cutting edge portions of the other end cutting edges 7 are formed at the points of intersection between the cutting faces 3 of the chip-removing grooves 2 and the flanks 12 that form the cutting edge portions of the end cutting edges 7. The flanks 12 that form the cutting edge portions of the other end cutting edges 7 are configured from first flanks 15 and second flanks 16. Therefore, the cutting edge portions of the other end cutting edges 7 are formed at the points of intersection between the first flanks 15 and the gash surfaces 18 formed at the distal sides of the cutting faces 3. The cutting edges are provided spanning the entire lengths of the end cutting edges 7 in Embodiment 1. Also, the other end cutting edges 7 are provided so as to be symmetrical with respect to the tool center O.

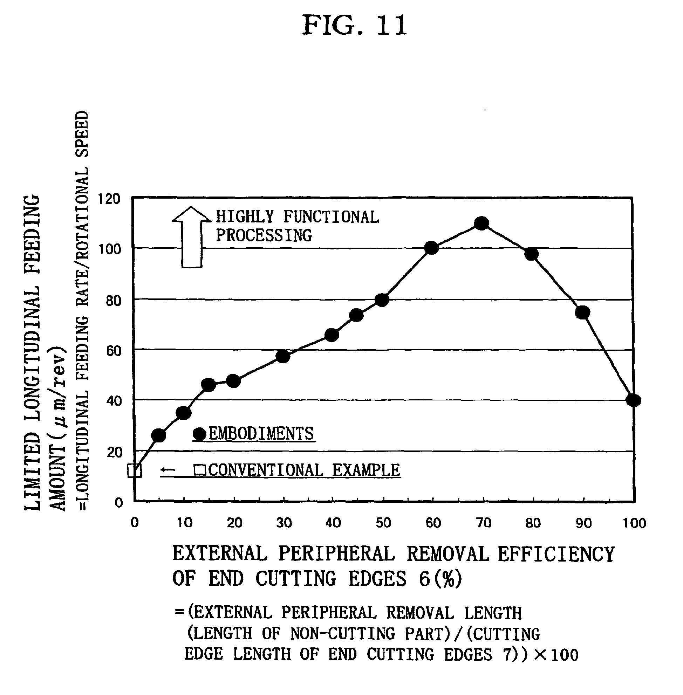

In Embodiment 1, the range (length of the cutting edges) of the cutting parts 21 of the end cutting edges 6 provided with non-cutting parts is determined by providing the non-cutting parts 22 only within the range of the rotational paths of the other end cutting edges 7. Specifically, as shown in FIG. 11, if the non-cutting parts 22 are provided across a length of 5% or more of the cutting edge length of the other end cutting edges 7, then it is possible to cut material in the axial direction at twice the speed or more of a conventional tool. Therefore, the cutting parts 21 should be provided so as to extend at a length equal to "the entire length of the end cutting edges 6 provided with non-cutting parts 22" minus "5% or more of the entire length of (the cutting edge portions of) the other end cutting edges 7."

Also, the non-cutting parts 22 are formed extending up to the external peripheral edges at the distal end of the tool main body 1, so that the portions of the end cutting edges 6 provided with non-cutting parts 22 that are nearer to the external periphery of the tool than the stepped parts 9 do not cut any material during longitudinal feeding.

Specifically, in Embodiment 1, the non-cutting parts 22 that are provided to the external peripheral portions (the portions that overlap the rotational paths of the other end cutting edges 7 and that are a specified distance from the external peripheral edges at the distal end of the tool main body 1) of the end cutting edges 6 provided with non-cutting parts 22 do not cut into the workpiece in the axial direction in relation to the cutting edge portions of the end cutting edges 6 and the cutting edge portions of the other end cutting edges 7, and thus do not cut any material.

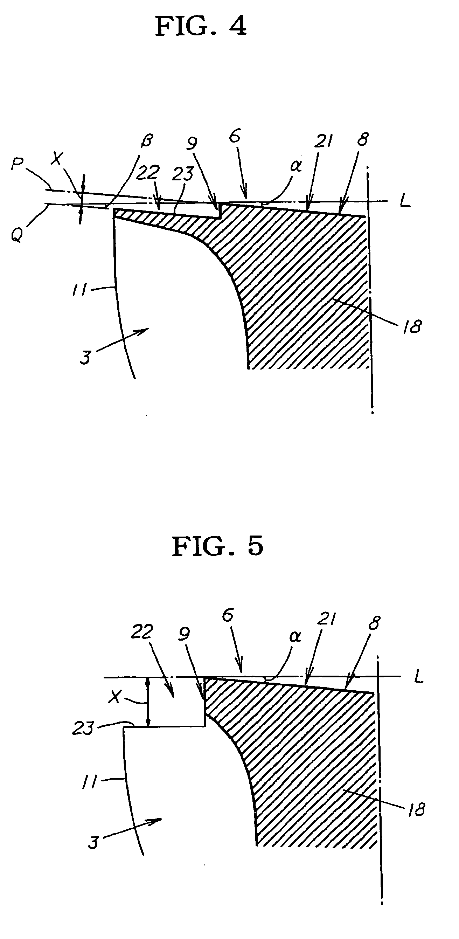

Specifically, as shown in FIGS. 4 and 5, the bottom surfaces 23 of the non-cutting parts 22 are formed so as to be recessed in relation to the axial direction of outward extending lines P of the cutting edge portions of the end cutting edges 6 provided with non-cutting parts 22, and are configured so as to be recessed in the axial direction in relation to the rotational paths of (the cutting edge portions) of the other end cutting edges 7 (so that within the range at least from the stepped parts 9 on which the non-cutting parts 22 are formed to the external peripheral edges, the outward extending lines P of the cutting edge portions of the end cutting edges 6 do not intersect with outward extending lines Q, which are the lines of intersection between the bottom surfaces 23 of the non-cutting parts 22 and the gash surfaces 18).

The bottom surfaces 23 of the non-cutting parts 22 are designed such that the external peripheral sides of the end cutting edges 6 do not cut any material as described above, and are therefore formed so that the flanks 8 do not form a single surface all the way to the outer periphery of the tool and that the outer periphery of the tool is depressed in the axial direction via the stepped parts 9, naturally forming so-called flanks whereby the bottom surfaces 23 do not come in contact with the workpiece or other worked materials.

Specifically, as shown in FIG. 5, in cases in which large parts of the external peripheral portions of the end cutting edges 6 cannot be cut away, the concave angles β (the angles β at which the bottom surfaces 23 of the non-cutting parts 22 are inclined in relation to a horizontal reference line L seen from the side of the tool) of the bottom surfaces 23 of the non-cutting parts 22 are set to be equal to or less than the concave angles of the flanks 8 that form the cutting parts 21, as shown, for example, in FIG. 4, so that the non-cutting parts do not cut any material. Also, the clearance angles of the flanks 8 and of the non-cutting parts 22 are 0° or greater, and the recessed amount X of the (bottom surfaces 23 of the) non-cutting parts 22 in the axial direction is set to the tool radius r or less. In Embodiment 1, the concave angles α and β of the flanks 8 and the bottom surfaces 23 of the non-cutting parts 22 are both set to 2°.

It is also beneficial in terms of damage resistance to form a flat land part by extending the gash surfaces 18 backward in the axial direction on the external peripheral sides of the end cutting edges 6 provided with non-cutting parts 22, and the other end cutting edges 7, so that the gash surfaces reach the external peripheral ends.

A four-edged square end mill was described in Embodiment 1, but the rotary cutting tool is not limited to a four-edged shape and may also have five or more edges, or three edges as shown in FIGS. 6 through 8. For example, FIGS. 6 through 8 depict a case of three edges, one of which is an end cutting edge 6 having a non-cutting part 22, and two of which are the other end cutting edges 7. FIG. 7 depicts an example in which the concave angle of the flank 8 and the concave angle of the bottom surface 23 of the non-cutting part 22 are set to the same angle, and FIG. 8 depicts an example in which the bottom surface 23 of the non-cutting part 22 lies along a horizontal plane that is orthogonal to the axial center.

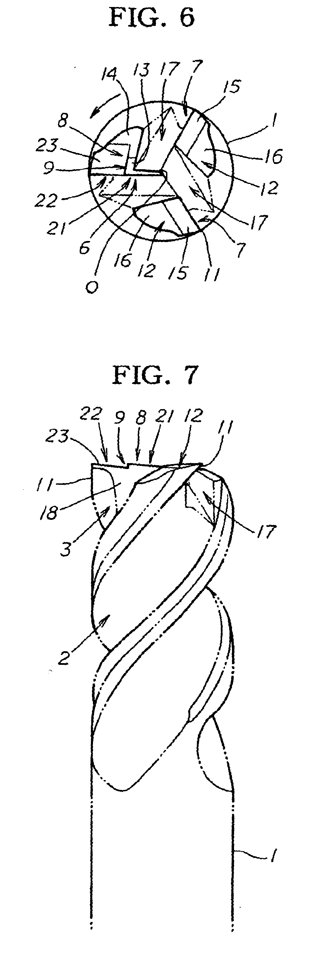

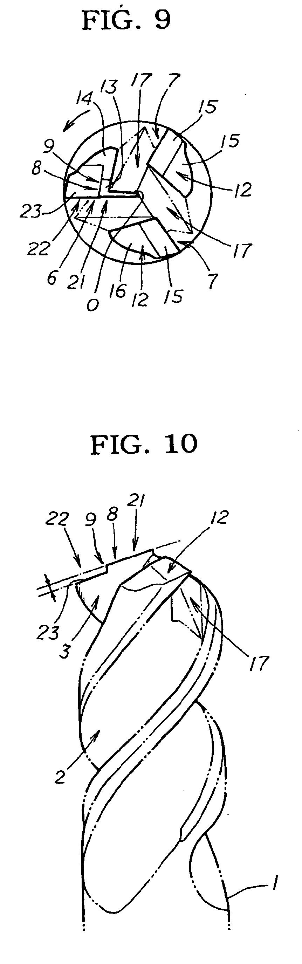

The same is true for a radius end mill or a ball end mill wherein the end cutting edges and the external peripheral edges 11 are connected via a corner awl edge with a substantially one-fourth arcuate shape, or for a drill or any other rotary cutting tool that is configured so that the end cutting edges 6, 7 on the side facing the tool center protrude past the external periphery of the tool in the axial direction, as is shown in FIGS. 9 and 10. For example, FIGS. 9 and 10 depict a case in which one of three end cutting edges is an end cutting edge 6 provided with a non-cutting part 22, and the other two are the other end cutting edges 7. FIG. 10 is similar to FIG. 7 and depicts an example in which the angle of inclination of the flank 8 (equivalent to the concave angle of the end mill) and the angle of inclination of the bottom surface 23 of the non-cutting part 22 are set to the same angle. In the case of a drill, external peripheral edges are not needed.

Since Embodiment 1 is configured as described above, cutting edges (cutting parts 21) are provided on the tool center sides of the end cutting edges 6 having the non-cutting parts 22. The stepped parts 9 function as borders, and these cutting edges exhibit cutting action (produce chips). The non-cutting parts 22 are provided to the tool's external periphery and do not exhibit cutting action (do not produce chips). It is apparent that the width of the chips is smaller than in conventional practice, and chips are not produced by cutting in the tool's external peripheral sides of the end cutting edges 6 provided with non-cutting parts 22. Consequently, chips resulting from cutting in the tool center sides of the end cutting edges 6 can be satisfactorily removed from the chip-removing grooves 2.

Therefore, Embodiment 1 provides a highly practical rotary cutting tool with which chips can be satisfactorily removed even during longitudinal feeding, and the accumulation of chips can be minimized.

### [Embodiment 2]

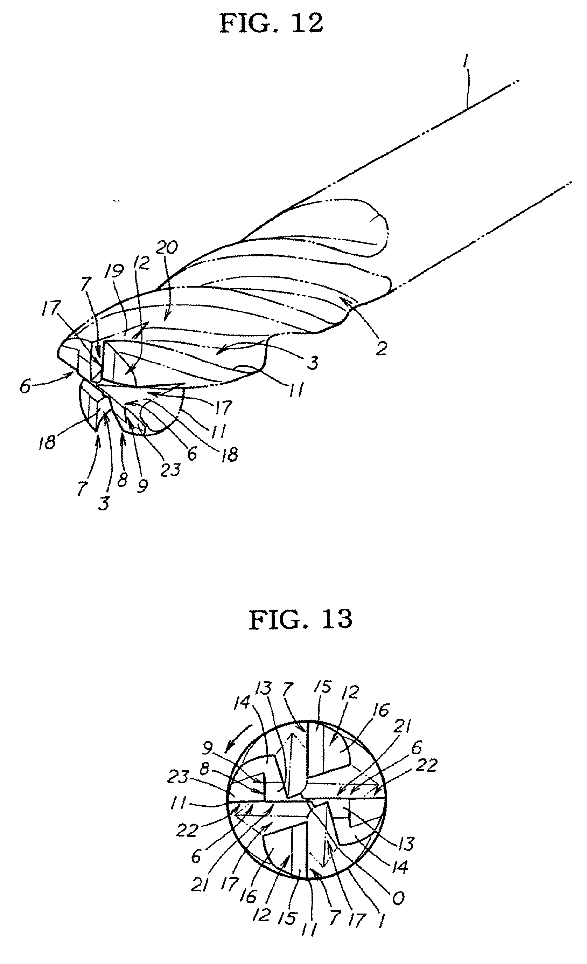

Embodiment 2 of the present invention will now be described with reference to FIGS. 12 through 21.

Embodiment 2 differs from Embodiment 1 only in the shape of the non-cutting parts 22, and is otherwise identical to Embodiment 1.

Specifically, in Embodiment 2, the non-cutting parts 22 are recessed in the axial direction of the tool main body 1, leaving at least part of the external periphery of the tool main body 1 at the distal end exposed, so that the chips cut by the end cutting edges 6 provided with non-cutting parts 22 can be divided by the stepped parts 9 into chips that are cut by the tool center sides of the end cutting edges 6 and chips that are cut by the tool's external peripheral sides, as shown in FIGS. 12 through 14.

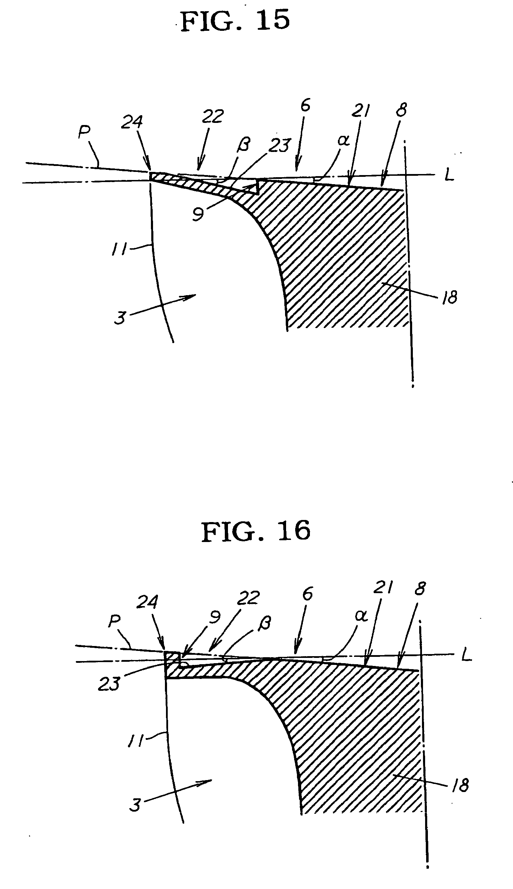

Specifically, as shown in FIG. 15, the concave angles β of the bottom surfaces 23 of the non-cutting parts 22 (the angles β at which the bottom surfaces are inclined in relation to a horizontal reference line L seen from the side of the tool) are set so as to be greater than the concave angles α of the flanks 8 that form the cutting parts 21 (so that the outward extending lines P of the end cutting edges 6 intersect with the lines of intersection between the bottom surfaces 23 of the non-cutting parts 22 and the gash surfaces 18).

Specifically, in Embodiment 2, the external peripheral portions are cut away at angles greater than the concave angles β of the flanks 8 so as not to include the external peripheral edges of at least the end cutting edges 6 provided with non-cutting parts 22, and the chips cut away on the side that faces the tool center can be separated from the chips cut away on the tool's external periphery. The separation is achieved using the stepped parts 9 formed by cutting away the external peripheral portions. Therefore, part of the flanks 8 remains on the side of the non-cutting parts 22 that faces the tool's external periphery, and cutting parts 24 other than the cutting parts 21 are formed on the sides of the non-cutting parts 22 that face the tool's external periphery.

In Embodiment 2, the concave angles of the flanks 8 that form the cutting edge portions of the end cutting edges 6 provided with non-cutting parts 22 are set to 2°, and the concave angles of the bottom surfaces 23 of the non-cutting parts 22 are set to 5°. Also, in Embodiment 2, the bottom surfaces 23 of the non-cutting parts 22 are surfaces that are inclined downwards toward the tool center from the tool's external periphery. The stepped parts 9 are formed in the ends of the inclined surfaces on the sides facing the tool center, but the stepped parts 9 may also be formed at the ends of the inclined surfaces on the tool's external periphery by surfaces inclined downwards from the tool center to the tool's external periphery as shown in FIG. 16.

Therefore, in Embodiment 2, chips produced by the end cutting edges 6 provided with non-cutting parts 22 are separated by the non-cutting parts 22 and the stepped parts 9 into chips that are cut by the cutting parts 21 on the sides facing the tool center and chips that are cut by the cutting parts 24 on the tool's external periphery, the width of the chips is reduced, the chips are removed more smoothly, and the non-cutting parts 22 do not exhibit any cutting action. Therefore, part of the end cutting edges 6 provided with non-cutting parts 22 are incapable of cutting the material, the amount of chips removed is reduced, and the chips can be removed more satisfactorily.

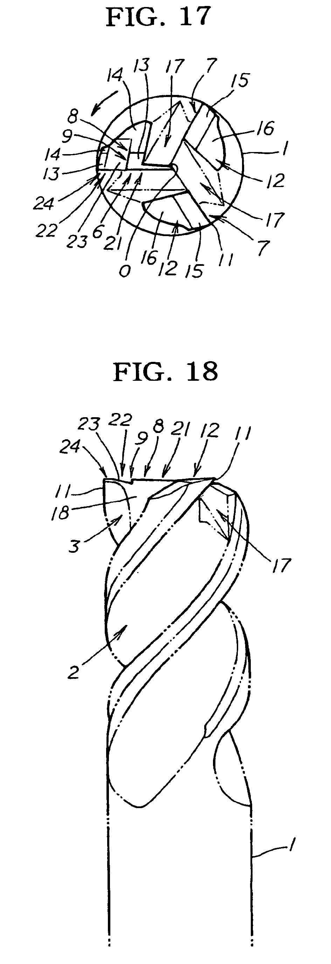

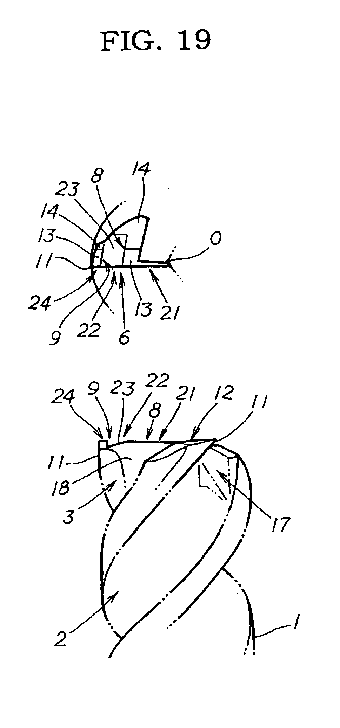

As in Embodiment 1, the rotary cutting tool is not limited to a four-edged shape and may also have five or more edges or three edges as shown in FIGS. 17 through 19. For example, FIGS. 17 through 19 depict a case of three end cutting edges, one of which is an end cutting edge 6 having a non-cutting part 22, and two of which are the other end cutting edges 7. FIG. 18 depicts an example in which the bottom surface 23 of the non-cutting part 22 is a surface that is inclined downward towards the tool center from the tool' s external periphery, and a stepped part 9 is formed at the end of the inclined surface on the side facing the tool center. FIG. 19 depicts an example in which a stepped part 9 is formed at the end of the inclined surface on the tool's external periphery by a surface that is inclined downwards from the tool center side to the tool's external periphery.

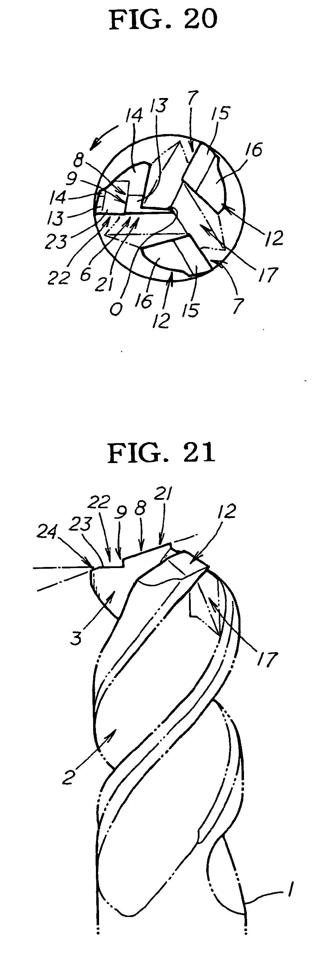

The same is true for a radius end mill or a ball end mill wherein the end cutting edges and the external peripheral edges 11 are connected via a corner awl edge with a substantially one-fourth arcuate shape, or for a drill or any other rotary cutting tool that is configured so that the end cutting edges 6, 7 on the side facing the tool center protrude past the external periphery of the tool in the axial direction, as is shown in FIGS. 20 and 21. For example, FIGS. 20 and 21 depict a case in which one of three end cutting edges is an end cutting edge 6 provided with a non-cutting part 22, and the other two are the other end cutting edges 7. FIG. 21 depicts an example in which the bottom surface 23 of the non-cutting part 22 lies in a horizontal plane orthogonal to the axial center, and the flank 8 inclined in relation to the axial center is cut away from the non-cutting part 22 to form a stepped part 9 at the end of the tool center side.

### [Brief Description of the Drawings]

FIG. 1 is a schematic explanatory perspective view of Embodiment 1;
FIG. 2 is a schematic explanatory front view of Embodiment 1;

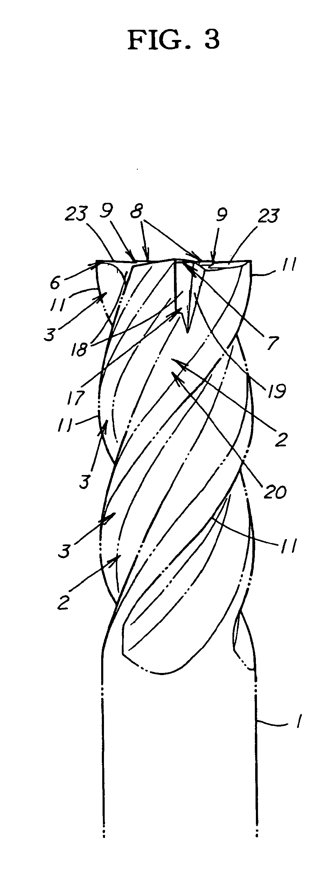

FIG. 3 is a schematic explanatory side view of Embodiment 1;
FIG. 4 is an enlarged schematic explanatory cross-sectional view of the main section in Embodiment 1;
FIG. 5 is an enlarged schematic explanatory cross-sectional view of the main section in another example;
FIG. 6 is a schematic explanatory front view of another example;
FIG. 7 is a schematic explanatory side view of another example;

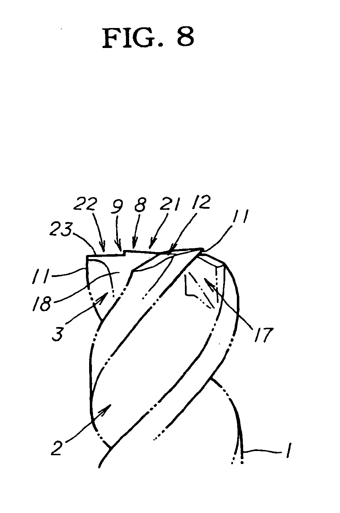

FIG. 8 is a schematic explanatory side view of another example;
FIG. 9 is a schematic explanatory front view of another example;
FIG. 10 is a schematic explanatory side view of another example;
FIG. 11 is a graph depicting the change in the limiting feed amount based on the external peripheral removal efficiency of the end cutting edges 6;
FIG. 12 is a schematic explanatory perspective view of Embodiment 2;
FIG. 13 is a schematic explanatory front view of Embodiment 2;

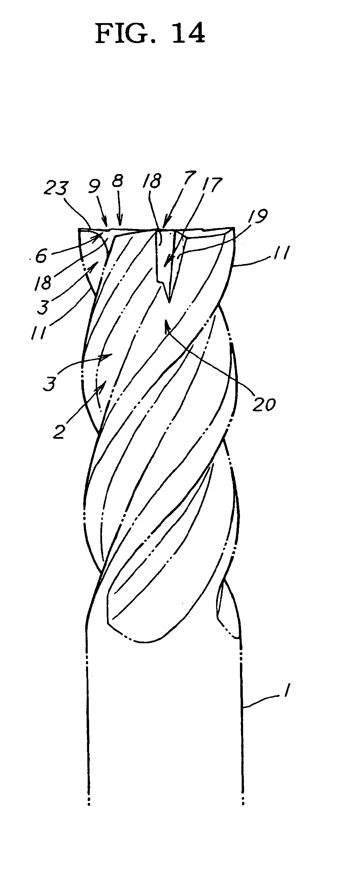

FIG. 14 is a schematic explanatory side view of Embodiment 2;
FIG. 15 is an enlarged schematic explanatory cross-sectional view of the main section in Embodiment 2;
FIG. 16 is an enlarged schematic explanatory cross-sectional view of the main section in another example;
FIG. 17 is a schematic explanatory front view of another example;
FIG. 18 is a schematic explanatory side view of another example;
FIG. 19 is a schematic explanatory side view of another example;
FIG. 20 is a schematic explanatory front view of another example; and
FIG. 21 is a schematic explanatory side view of another example.

## Claims

1. A rotary cutting tool in which a large number of helical chip-removing grooves (2) are provided in an external periphery of a distal end of a substantially cylindrical tool main body (1), and end cutting edges (6, 7) integrated with the tool main body (1) are provided at the lines of intersection between the cutting faces (3) of the chip-removing grooves (2) and the distal-end flanks of the tool main body (1); said rotary cutting tool being **characterized in that** at least one of the end cutting edges (6) is configured so that the part of the cutting edge near the external periphery of the tool is recessed in the axial direction of the tool main body (1) to form a non-cutting part (22), the non-cutting part (22) being provided via a stepped part (9) to the tool's external periphery of a cutting part (21), which has cutting edges that extend to a specified position in the external peripheral direction of the tool from either the tool center (O) or from a position near the center and the end cutting edges (7) other than the end cutting edges on which the non-cutting part (22) is formed being designed as end cutting edges that have cutting edge portions whose length is equal to or less than the length of the end cutting edge (6) provided with the non-cutting part (22), as measured from the external peripheral edges at the distal end of the tool main body (1).

2. The rotary cutting tool according to claim 1, **characterized in that** the non-cutting part (22) is provided within the range of the rotational paths of the other end cutting edges (7).

3. The rotary cutting tool according to claim 2, **characterized in that** the amount by which the non-cutting part (22) is recessed in the axial direction extends below the positions of the cutting edge portions of the other end cutting edges (7).

4. The rotary cutting tool according to claim 3, **characterized in that** the non-cutting part (22) has a length equal to or greater than at least 5% of the cutting edge lengths of the other end cutting edges (7).

5. The rotary cutting tool according to claim 4, **characterized in that** the non-cutting part (22) is formed to reach the external peripheral edges of the tool main body (1).

6. The rotary cutting tool according to claim 4, **characterized in that** the non-cutting part (22) is configured so as to be recessed in the axial direction of the tool main body (1), leaving part of the external periphery of the tool main body (1) exposed.

7. The rotary cutting tool according to claim 6, **characterized in that** the angle (β) at which the bottom surfaces (23) of the non-cutting part (22) is inclined in relation to a horizontal reference line (L) as seen from the side of the tool is greater than the concave angles (β) of the flanks (8) that form the cutting parts (21).

8. The rotary cutting tool according to any one of claims 1 to 7, **characterized in that** the numerous end cutting edges are disposed equally separated in the circumferential direction of the tool.

9. The rotary cutting tool according to claim 8, **characterized in that** at least one of the numerous helical chip-removing grooves (2) is disposed in the circumferential direction of the tool at a different division angle than the other chip-removing grooves (2).

10. The rotary cutting tool according to any one of claims 1 to 9, **characterized in that** external peripheral edges (11) are formed at lines of intersection between the cutting faces (3) of the chip-removing grooves (2) of the tool main body (1), and either the external peripheral surfaces of the tool main body (1) or the external peripheral flanks formed at the external periphery of the tool main body (1).

11. The rotary cutting tool according to claim 10, **characterized in that** the end cutting edges (6, 7) and the external peripheral edges (11) are connected via a corner awl edge with an arcuate shape that curves towards the outside of the tool.

12. The rotary cutting tool according to any one of claims 1 to 9, **characterized in that** the sides of the end cutting edges that face the tool center protrude farther in the axial direction of the tool main body (1) than does the tool's external periphery.

## Patentansprüche

1. Rotierendes Schneidwerkzeug, das viele spiralförmige, Späne abführenden Nuten (2) entlang eines äußeren Umfangs eines distalen Endes eines im Wesentlichen zylindrischen Werkzeughauptkörpers (1) aufweist und in den Werkzeughauptkörper (1) integrierte Stirnschneiden (6, 7) an den Schnittlinien zwischen den Schneidflächen (3) der Späne abführenden Nuten (2) und den an einem distalen Ende liegenden Flanken des Werkzeughauptkörpers (1) aufweist, wobei das drehende Schneidwerkzeug **dadurch gekennzeichnet ist, dass** wenigstens eine Stirnschneide (6) derart ausgebildet ist, dass der Teil der Stirnschneide in der Nähe des äußeren Umfangs des Werkzeugs in der axialen Richtung des Werkzeughauptkörpers (1) vertieft ist, so dass ein nicht-schneidender Teil (22) gebildet wird, wobei der nicht-schneidende Teil (22) durch einen abgesetzten Teil (9) zu dem äußeren Werkzeugumfang eines Schneidteils (21), das Schneiden aufweist, die sich in einer bestimmten Lage in der äußeren Umfangsrichtung des Werkzeugs von entweder der Werkzeugmitte (O) oder von einer Position in der Nähe der Mitte erstrecken, vorgesehen ist und die Stirnschneiden (7), anders als die Stirnschneiden, auf denen der nicht-schneidende Teil (22) ausgebildet ist, als Stimschneiden ausgebildet sind, die Schneidenbereiche aufweisen, deren Länge gleich oder geringer als die Länge der mit dem nicht-schneidenden Teil (22) versehenen Stirnschneide (6) ist, wenn von den äußeren Umfangsrändern an dem distalen Ende des Werkzeughauptkörpers (1) gemessen wird.

2. Rotierendes Schneidwerkzeug nach Anspruch 1 **dadurch gekennzeichnet, dass** der nicht-schneidende Teil (22) in dem Bereich der drehenden Bahnkurve der anderen Stirnschneiden (7) vorgesehen ist.

3. Rotierendes Schneidwerkzeug nach Anspruch 2 **dadurch gekennzeichnet, dass** der Betrag, zu dem der nicht-schneidende Teil (22) in der axialen Richtung vertieft ist, sich unterhalb den Positionen der Schneidenbereiche der anderen Stimschneiden (7) erstreckt.

4. Rotierendes Schneidwerkzeug nach Anspruch 3 **dadurch gekennzeichnet, dass** der nicht-schneidende Teil (22) eine Länge aufweist, die gleich oder größer als wenigstens 5% der Schneidenlängen der anderen Stirnschneiden (7) ist.

5. Rotierendes Schneidwerkzeug nach Anspruch 4 **dadurch gekennzeichnet, dass** der nicht-schneidende Teil (22) derart ausgebildet ist, dass er an die äußeren Umfangsränder des Werkzeughauptkörpers (1) heranreicht.

6. Rotierendes Schneidwerkzeug nach Anspruch 4 **dadurch gekennzeichnet, dass** der nicht-schneidende Teil (22) derart ausgebildet ist, dass er in der axialen Richtung des Werkzeughauptkörpers (1) vertieft ist, wodurch ein Teil des äußeren Umfangs des Werkzeughauptkörpers (1) frei gelassen wird.

7. Rotierendes Schneidwerkzeug nach Anspruch 6 **dadurch gekennzeichnet, dass** der Winkel (β), in dem die Grundflächen (23) des nicht-schneidenden Teils (22) in Bezug auf eine horizontale Referenzlinie (L), betrachtet von der Seite des Werkzeugs, geneigt sind, größer als der Neigungswinkel (α) der die Schneidteile (21) bildenden Flanken (8) ist.

8. Rotierendes Schneidwinkel nach einem Ansprüche 1 bis 7 **dadurch gekennzeichnet, dass** die zahlreichen Stimschneiden gleichmäßig verteilt in der Umfangsrichtung des Werkzeugs angeordnet sind.

9. Rotierendes Schneidwerkzeug nach Anspruch 8 **dadurch gekennzeichnet, dass** wenigstens eine der zahlreichen spiralförmigen, Späne abführenden Nuten (2) in der Umfangsrichtung des Werkzeugs in einem von den anderen Späne abführenden Nuten (2) unterschiedlichen Teilungswinkel angeordnet ist.

10. Rotierendes Schneidwerkzeug nach einem der Ansprüche 1 bis 9 **dadurch gekennzeichnet, dass** die äußeren Umfangsränder (11) an Schnittlinien zwischen den Schneidoberflächen (3) der Späne abführenden Nuten (2) des Werkzeughauptkörpers (1) und entweder den äußeren Umfangsoberflächen des Werkzeughauptkörpers (1) oder den äußeren Umfangsflanken, die entlang des äußeren Umfangs des Werkzeughauptkörpers (1) ausgebildet sind, gebildet sind.

11. Rotierendes Schneidwerkzeug nach Anspruch 10 **dadurch gekennzeichnet, dass** die Stimschneiden (6, 7) und die äußeren Umfangsränder (11) über eine Eckkante mit einer bogenförmigen Form, die sich in Richtung nach außen des Werkzeugs krümmt, verbunden sind.

12. Rotierendes Schneidwerkzeug nach einem der Ansprüche 1 bis 9 **dadurch gekennzeichnet, dass** die Seiten der Stimschneiden, die auf die Werkzeugmitte gerichtet sind, weiter als der äußere Umfang des Werkzeugs in der axialen Richtung des Werkzeughauptkörpers (1) hervorstehen.

## Revendications

1. Outil de coupe rotatif dans lequel un nombre important de rainures hélicoïdales d'évacuation de copeaux (2) sont prévues dans une périphérie externe d'une extrémité distale d'un corps principal d'outil sensiblement cylindrique (1), et des arêtes tranchantes d'extrémité (6, 7) intégrées avec le corps principal d'outil sont prévues au niveau des lignes d'intersection entre les faces tranchantes (3) des rainures d'évacuation de copeaux (2) et les flancs d'extrémité distale du corps principal d'outil (1) ; ledit outil de coupe rotatif étant **caractérisé en ce qu'**au moins une des arêtes tranchantes d'extrémité (6) est configurée de sorte que la partie de l'arête tranchante près de la périphérie externe de l'outil soit évidée dans la direction axiale du corps principal d'outil (1) pour former une partie non tranchante (22), la partie non tranchante (22) étant pourvue, par l'intermédiaire d'une partie à épaulement (9) sur la périphérie externe de l'outil, d'une partie tranchante (21), qui comporte des arêtes tranchantes qui s'étendent jusqu'à une position spécifiée dans la direction périphérique externe de l'outil à partir du centre (O) de l'outil ou à partir d'une position près du centre et les arêtes tranchantes d'extrémité (7) autres que les arêtes tranchantes d'extrémité sur lesquelles la partie non tranchante (22) est formée étant conçues en tant qu'arêtes tranchantes d'extrémité qui comportent des parties d'arête tranchante dont la longueur est égale ou inférieure à la longueur de l'arête tranchante d'extrémité (6) pourvue de la partie non tranchante (22), telle qu'elle est mesurée à partir des bords périphériques externes à l'extrémité distale du corps principal d'outil (1).

2. Outil de coupe rotatif selon la revendication 1, **caractérisé en ce que** la partie non tranchante (22) est prévue au sein de la plage des trajets de rotation des autres arêtes tranchantes d'extrémité (7) .

3. Outil de coupe rotatif selon la revendication 2, **caractérisé en ce que** la quantité selon laquelle la partie non tranchante (22) est évidée dans la direction axiale s'étend en dessous des positions des parties d'arête tranchante des autres arêtes tranchantes d'extrémité (7).

4. Outil de coupe rotatif selon la revendication 3, **caractérisé en ce que** la partie non tranchante (22) possède une longueur égale ou supérieure à au moins 5 % des longueurs d'arête tranchante des autres arêtes tranchantes d'extrémité (7).

5. Outil de coupe rotatif selon la revendication 4, **caractérisé en ce que** la partie non tranchante (22) est formée pour atteindre les bords périphériques externes du corps principal d'outil (1).

6. Outil de coupe rotatif selon la revendication 4, **caractérisé en ce que** la partie non tranchante (22) est configuré afin d'être évidée dans la direction axiale du corps principal d'outil (1), laissant une partie de la périphérie externe du corps principal d'outil (1) exposée.

7. Outil de coupe rotatif selon la revendication 6, **caractérisé en ce que** l'angle (β) auquel les surfaces inférieures (23) de la partie non tranchante (22) est inclinée par rapport à une ligne de référence horizontale (L) en vue à partir du côté de l'outil est supérieur aux angles concaves (α) des flancs (8) qui forment la partie tranchantes (21).

8. Outil de coupe rotatif selon une quelconque des revendications 1 à 7, **caractérisé en ce que** les nombreuse arêtes tranchantes d'extrémité sont séparées de façon égale dans la direction circonférentielle de l'outil.

9. Outil de coupe rotatif selon la revendication 8, **caractérisé en ce qu'**au moins une des nombreuses rainures hélicoïdales d'évacuation de copeaux (2) est disposée dans la direction circonférentielle de l'outil à un angle de division différent par rapport aux autres rainures d'évacuation de copeaux (2) .

10. Outil de coupe rotatif selon une quelconque des revendications 1 à 9, **caractérisé en ce que** les bords périphériques externes (11) sont formés à des lignes d'intersection entre les faces tranchantes (3) des rainures d'évacuation de copeaux (2) du corps principal d'outil (1) et les surfaces périphériques externes du corps principal d'outil (1) ou les flancs périphériques externes formés à la périphérie externe du corps principal d'outil (1) .

11. Outil de coupe rotatif selon la revendication 10, **caractérisé en ce que** les arêtes tranchantes d'extrémité (6, 7) et les bords périphériques externes (11) sont reliés par l'intermédiaire d'une arête de poinçon d'angle avec une forme arquée qui s'incurve vers l'extérieur de l'outil.

12. Outil de coupe rotatif selon une quelconque des revendications 1 à 9, **caractérisé en ce que** les cotés des arêtes tranchantes d'extrémité qui font face au centre d'outil font davantage saillie dans la direction axiale du corps principal d'outil (1) que la périphérie externe de l'outil.
